# EUROPÄISCHE PATENTSCHRIFT

(11) **EP 1 497 954 B1**
(45) Veröffentlichungstag und Bekanntmachung des Hinweises auf die Patenterteilung: **12.10.2005**
(21) Anmeldenummer: 03720276.9
(22) Anmeldetag: 14.04.2003
(51) Int. Cl.: H04L 12/40, B60R 16/02

(54) **VERFAHREN UND VORRICHTUNG ZUM AUFFÜLLEN VON DATENABSCHNITTEN MIT EINEM FÜLLMUSTER UND ANSCHLIESSENDEM ÜBERSCHREIBEN MIT INFORMATION, SOWIE BUSSYSTEM HIERZU**
METHOD AND DEVICE FOR PADDING DATA SEGMENTS WITH A FILL PATTERN AND SUBSEQUENT OVERWRITING WITH INFORMATION, IN ADDITION TO CORRESPONDING BUS SYSTEM
PROCEDE ET DISPOSITIF DE REMPLISSAGE DE SEGMENTS DE DONNEES A L'AIDE D'UN MODELE DE REMPLISSAGE, AINSI QUE D'ECRASEMENT SUBSEQUENT AU MOYEN D'INFORMATIONS, ET SYSTEME DE BUS CORRESPONDANT

(30) Priorität: 15.04.2002 DE 10216921
(43) Veröffentlichungstag der Anmeldung: 19.01.2005
(73) Patentinhaber: ROBERT BOSCH GMBH, 70442 Stuttgart (DE)
(72) Erfinder: FUEHRER, Thomas, 70839 Gerlingen (DE); HUGEL, Robert, 76199 Karlsruhe (DE)
(86) Internationale Anmeldenummer: PCT/DE2003/001245
(87) Internationale Veröffentlichungsnummer: WO 2003/088589

(56) Entgegenhaltungen:
- US-A- 5 598 579
- US-A1- 2001 030 955
- US-B1- 6 233 554

## Beschreibung

### Stand der Technik

Die Erfindung betrifft ein Verfahren und eine Vorrichtung zum Auffüllen von Abschnitten zur Übertragung von Daten auf einem Bussystem sowie ein entsprechendes Bussystem gemäß den Oberbegriffen der unabhängigen Ansprüche.

Die Vernetzung von Steuergeräten, Sensorik und Aktuatorik mit Hilfe eines Kommunikationssystems, eines Bussystems, hat in den letzten Jahren beim Bau von modernen Kraftfahrzeugen oder auch im Maschinenbau, insbesondere im Werkzeugmaschinenbereich als auch in der Automatisierung, drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über einen Bus bzw. ein Bussystem statt. Der Kommunikationsverkehr auf dem Bussystem, Zugriffs- und Empfangsmechanismen sowie Fehlerbehandlung werden über ein Protokoll geregelt.

Als Protokoll im Kfz-Bereich etabliert ist der CAN (controller area network). Dies ist ein ereignisgesteuertes Protokoll, d. h. Protokollaktivitäten wie das Senden einer Nachricht werden durch Ereignisse iniziiert, die ihren Ursprung außerhalb des Kommunikationssystems selbst haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine eindeutige Priorität zugewiesen ist. Das CAN-Protokoll ist sehr flexibel. Ein Hinzufügen weiterer Knoten und Nachrichten ist damit problemlos möglich, solange es noch freie Prioritäten gibt.

Ein alternativer Ansatz zu einer solchen ereignisgesteuerten spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen bzw. Zeitabschnitten, in denen ein Sender exklusives Senderecht hat. Ein Hinzufügen von neuen Knoten wird dann möglich, wenn zuvor die entsprechenden Zeitabschnitte freigelassen wurden. Dieser Umstand erzwingt, die Nachrichtenreihenfolge schon vor Inbetriebnahme festzusetzen, wobei ein Fahrplan erstellt wird, der den Anforderungen der Nachrichten bezüglich Wiederholrate, Redundanz, Deadlines usw. genügen muss.

Neben dem ereignisgesteuerten Ansatz und dem rein zeitgesteuerten Ansatz ist auch ein zeitgesteuerter CAN-Ansatz, der sogenannte TTCAN (time triggered controller area network) bekannt. Dieser genügt den oben skizzierten Forderungen nach zeitgesteuerter Kommunikation sowie den Forderungen nach einem gewissen Maß an Flexibilität Der TTCAN erfüllt dies durch den Aufbau der Kommunikationsrunde (basic cycle) in sogenannte exklusive Zeitfenster bzw. Zeitabschnitte für periodische Nachrichten bestimmter Kommunikationsteilnehmer und in sogenannte arbitrierende Zeitfenster oder Zeitabschnitte für spontane Nachrichten mehrerer Kommunikationsteilnehmer.

Neben den genannten Bussystemen ist eine Vielzahl von Bus- bzw. Kommunikationssystemen zur Verbindung von Teilnehmern in verteilten Systemen bekannt. Im Rahmen der genannten und anderer Bussysteme ist beispielsweise vor dem Hintergrund der Flexibilität die Breite des Zeitabschnitts bzw. des zur Datenübertragung vorgesehenen Abschnitts durch die Gesamtzahl der darin übertragbaren Bits jeweils wählbar. Wird allerdings die Breite des Datenabschnitts oder kürzer Abschnitts bzw. Zeitabschnitts gewählt bzw. vorgegeben, insbesondere bei der Konfiguration, wird mit dieser gewählten Gesamtzahl an Bits bzw. der gewählten Breite, aber auch die Länge der darin gesendeten Nachricht festgelegt. Das bedeutet, dass längere Nachrichten über mehrere solcher Abschnitte verteilt werden müssen bzw. kürzere Nachrichten aufgefüllt werden müssen, um die Gesamtzahl der Bits im Abschnitt zu erreichen. Dies wird mit Padding bezeichnet. Ein solches Auffüllen fehlender Daten in einem Abschnitt, bezogen auf ein Bussystem, ist in der US 5,598,579 und US-B1-6 233 554 dargestellt. Ebenso zeigt die US 6,349,348B1 ein Padding, also das Auffüllen fehlender Daten, wenn die Datengröße kleiner ist als eine vorgegebene Größe, mit einem Füllmuster.

Dabei wird allerdings zunächst der eigentliche Dateninhalt beispielsweise in einen Speicher oder Puffer kopiert und im Anschluss mit dem Paddingmuster oder Füllmuster ergänzt, um die vorgegebene Gesamtzahl an Bits bzw. die Gesamtgröße des Abschnitts zu erhalten. Dabei können allerdings folgende Fehlerarten auftreten:
- Durch das nachträgliche Einfügen des Füllmusters wird der Nachrichteninhalt teilweise überschrieben, und ein falscher Nachrichteninhalt oder Dateninhalt würde entstehen.
- Der Nachrichten- oder Dateninhalt würde vollständig überschrieben, wobei auch hier ein falscher Dateninhalt oder Nachrichteninhalt entstehen würde.
- Weiterhin kann die eigentliche Nachrichtenlänge, also die Zahl der Datenbits über die zulässige Länge hinaus ergänzt werden, wobei dann weitere Nachrichteninhalte bzw. Dateninhalte undefinierten Inhalts entstehen, was auch hier einen falschen Nachrichteninhalt bzw. Dateninhalt zur Folge hat.

Es zeigt sich also, dass der genannte Stand der Technik nicht in jeder Hinsicht optimale Ergebnisse zu liefern vermag, womit sich die Aufgabe ergibt, diese Situation zu verbessern, insbesondere die genannten Fehlerquellen und Fehlerarten zu beherrschen.

### Vorteile der Erfindung

Die Erfindung zeigt ein Verfahren und eine Vorrichtung zum Auffüllen von Abschnitten zur Übertragung von Daten auf einem Bussystem, wobei die Abschnitte eine vorgegebene Gesamtzahl an Binärer Information, insbesondere Bytes, aufweisen und die Daten in den Abschnitten übertragen werden, wobei bei einer Übertragung von Daten, die weniger Binäre Information, insbesondere Bytes, umfassen als die vorgegebene Gesamtzahl des Abschnitts, die fehlende Binäre Information, insbesondere Bytes, der Daten zur Gesamtzahl des Abschnitts durch ein Füllmuster entsprechend der Zahl Binärer Information, insbesondere Bytes, aufgefüllt werden, wobei nun zuerst ein Füllmuster, dessen Zahl Binärer Information, insbesondere Bytes, der Gesamtzahl des Abschnitts entspricht, in den Abschnitt eingeschrieben wird und anschließend die Binäre Information, insbesondere Bytes, der Daten in den selben Abschnitt eingeschrieben werden, wobei die jeweiligen Binäre Information, insbesondere Bytes, des Füllmusters durch die Binäre Information, insbesondere Bytes, der Daten überschrieben werden. Damit können vorteilhafter Weise die oben genannten Fehlerquellen ausgeschlossen werden, da das Füllmuster mit den regulären Daten überschrieben wird und nicht umgekehrt.

Vorteilhafter Weise, bezogen auf ein erfindungsgemäßes Bussystem, werden die Binäre Information, insbesondere Bytes, des Füllmusters und die Binäre Information, insbesondere Bytes, der Daten in einem Pufferspeicher in den Abschnitt eingeschrieben, und dieser Abschnitt wird dann aus dem Pufferspeicher im Rahmen der Zugriffs- und Empfangsmechanismen, also zum vorgesehenen Zeitpunkt auf das Bussystem übertragen.

Dabei handelt es sich vorteilhafter Weise um ein zeitgesteuertes Bussystem, wobei die Abschnitte direkt Zeitabschnitten auf dem Bussystem entsprechen, wobei die Daten in den entsprechenden Zeitabschnitten übertragen werden. Ein erfindungsgemäßes Bussystem teilt dabei eine Kommunikationsrunde in ein statisches und in ein dynamisches Segment ein, wobei insbesondere im statischen Segment eine bei der Konfiguration frei wählbare Vorgabe der Gesamtzahl der Bits eines Abschnitts ermöglicht wird.

Weitere Vorteile und vorteilhafte Ausgestaltungen ergeben sich aus der Beschreibung sowie den Merkmalen der Ansprüche.

### Zeichnung

Die Erfindung wird im Weiteren anhand der in der Zeichnung dargestellten Figuren näher erläutert.

Darin zeigt
Figur 1 ein verteiltes System, also ein Netzwerk- bzw. ein Bussystem mit wenigstens einem Teilnehmer sowie Mitteln zur Durchführung des erfindungsgemäßen Verfahrens.
Figur 2 zeigt ein Beispiel einer erfindungsgemäßen Kommunikationsrunde mit aneinandergereihten Abschnitten zur Datenübertragung.

### Beschreibung der Ausführungsbeispiele

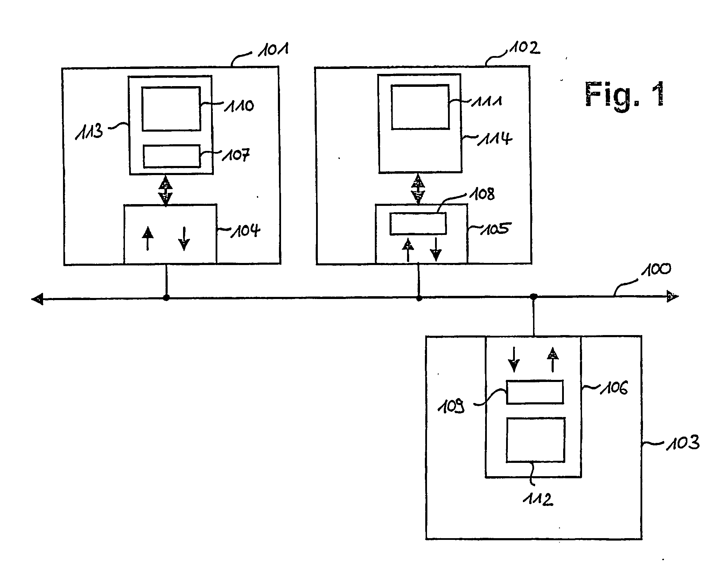

Figur 1 zeigt ein Bussystem 100 mit einem ersten Teilnehmer 101, einem zweiten Teilnehmer 102 und einem dritten Teilnehmer 103, also ein verteiltes System. Da die Kommunikation zum Einen durch die Teilnehmer selbst bzw. darin enthaltener Recheneinheiten oder Steuereinheiten sowie durch separate Steuereinheiten möglich ist, beispielsweise einen Buscontroller, der intern oder extern bezogen auf den Teilnehmer gelagert ist, werden im Weiteren die Begriffe des Bussystems und des verteilten Systems gleichbedeutend verwendet. D. h. das Bussystem kann sowohl die reine Kommunikationsverbindung mit Steuereinheiten zur Aufrechterhaltung bzw. Bewerkstelligung der Kommunikation als auch die Kommunikationsverbindung mit angeschlossenen Teilnehmern, die ihrerseits die Kommunikation bewerkstelligen sowie aus beiden Varianten vermischte Systeme sein.

Deshalb sind mit den Teilnehmern 101 bis 103 auch drei Varianten für Teilnehmerstrukturen dargestellt, wobei weitere Varianten durch Kombination sofort ersichtlich, und aus Übersichtlichkeitsgründen nicht dargestellt, ebenso verwendbar sind. Teilnehmer 101 zeigt eine Schnittstelle 104 zum Bus 100 mit einer Verarbeitungseinheit 113, welche einen Pufferspeicher 107 sowie eine Steuereinheit bzw. einen Mikrocomputer oder einen Prozessor 110 enthält, welche im ersten Beispiel separat von der Schnittstelleneinheit 104 dargestellt sind. D. h. die Steuerung der Kommunikation erfolgt beispielsweise im Teilnehmer selbst. Teilnehmer 102 zeigt wiederum eine Schnittstelleneinheit 105, die aber diesmal ihrerseits den Pufferspeicher 108 enthält. Die Verarbeitungseinheit 114 enthält somit nicht den Pufferspeicher, sondern lediglich die Steuereinheit 111, d. h. hier kann die Steuerung durch den Teilnehmer selbst erfolgen, wobei die Pufferung in der Schnittstelleneinheit 105 erfolgt. Die Schnittstelleneinheit 104 oder 105 selbst kann dabei ebenso intern oder extern, bezogen auf den Teilnehmer, lokalisiert sein. Teilnehmer 103 zeigt als weiteres Beispiel eine Schnittstelleneinheit 106, welche neben dem Pufferspeicher 109 ebenfalls eine Verarbeitungseinheit, insbesondere eine Steuereinheit wie einen Buscontroller 112 enthält. In diesem Fall wird somit die gesamte Kommunikation durch die Schnittstelleneinheit 106 verarbeitet bzw. gesteuert. Dabei kann auch hier die Schnittstelleneinheit 106 intern oder extern, bezogen auf den Teilnehmer 103, angeordnet sein. Die Verarbeitungseinheiten, insbesondere 110 und 111, können dabei neben der Steuerung der Kommunikation auch weitere Aufgaben verarbeiten.

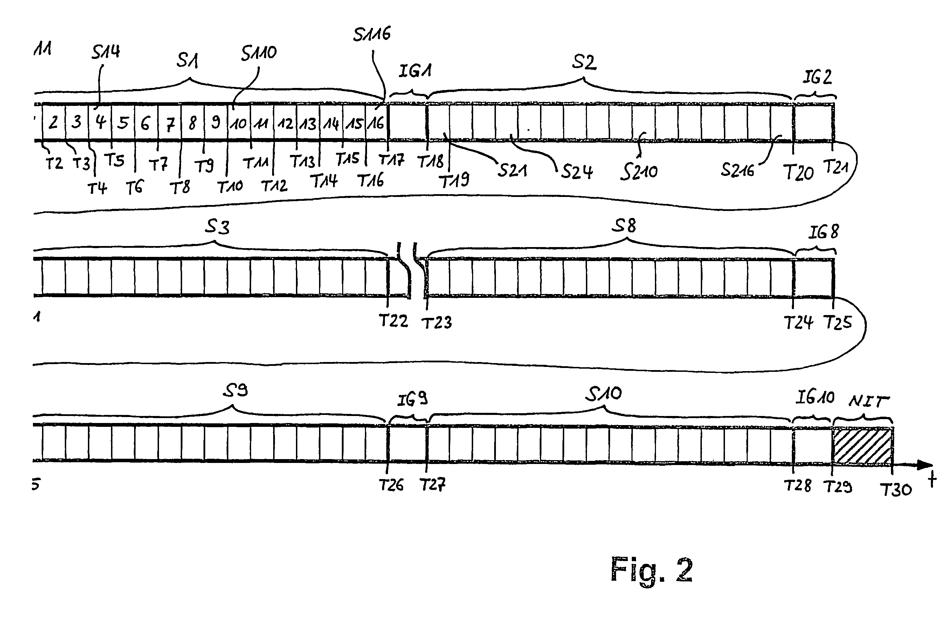

In dem in Figur 1 beispielhaft dargestellten Bussystem erfolgt ebenso beispielhaft eine Kommunikation im Rahmen einer Kommunikationsrunde gemäß Figur 2. Darin sind mit S1 bis S10 verschiedene Abschnitte, insbesondere Zeitabschnitte, also Time Slots oder Slots zur Datenübertragung gezeigt. In einer beispielhaften Spezifikation für ein Bussystem bzw. ein entsprechendes Busprotokoll wird das statische Segment einer Kommunikationsrunde oder auch die gesamte Kommunikationsrunde in N Zeiteinheiten oder Zeitabschnitte, insbesondere Abschnitte, Slots, zur Datenübertragung unterteilt, die für das Senden von Nachrichten, also Daten, vorgesehen sind. Dabei ist eine eindeutige Zuordnung des Teilnehmers bzw. Busknotens mit der jeweiligen Nachricht, also dem Dateninhalt sowie dem Abschnitt, also dem Slot S1 bis S10, möglich, insbesondere über eine Kennung, eine sogenannte Frame-ID. Dabei kann die Abschnittsbreite bei der Konfiguration der Kommunikation frei gewählt werden, wobei allerdings mit der gewählten Breite, also der Gesamtzahl der Bits, die in einem solchen Abschnitt übertragen werden können, auch die Länge der darin gesendeten Nachrichten in allen Abschnitten des statischen Segments. D. h. in unserem Beispiel ist ein statisches Segment von T1 bis T29 dargestellt mit zehn Abschnitten oder Slots, wobei die Gesamtdauer des Abschnitts der Länge des Slots S1 bis S10 sowie einem zugehörigen Abschnittszwischenraum, dem sogenannten Inter Frame Gap entspricht.

Des Weiteren ist hier die Länge eines Abschnitts S 1 bis S 10 mit 16 Byte, dargestellt beispielsweise im ersten Abschnitt S1 von T1 bis T17 gewählt. Da der Inter Frame Gap IG beliebig, inbesondere auch 0 sein kann, ist mit Abschnitt in diesem Beispiel nur der datentragende Abschnitt bezeichnet. Die Dauer des Abschnitts ist aber eigentlich der Datentragende Abschnitt plus das zugehörige Inter frame gap, also hier S1 + IG1, woran dann der nächste Abschnitt anschließt. Das bedeutet, dass längere Nachrichten, also insbesondere im diesen Beispiel größer als 16 Byte über mehrere Abschnitte durch eine höhere Anwendungsschicht verteilt werden müssen, wie dies im Rahmen einer Nachrichtensegmentierung, z. B. durch den FTCom Layer in OSEKtime geschieht. Kürzere Nachrichten, also hier inbesondere kürzer als 16 Byte, müssen per Spezifikation, also Protokollvorschrift, auf die größtmögliche Nachrichtenlänge, eben hier 16 Byte, ausgedehnt bzw. ergänzt, also die fehlenden Bytes aufgefüllt werden; das bereits erwähnte Padding. D.h Die Nachrichten werden insbesondere in binärer Information also Bits oder Bytes übertragen, wobei die Größe der Nachrichtenabschnitte hier 16 Byte beliebig wählbar ist.

Also im hier genannten Beispiel erfolgt eine gewählte Zerteilung der Kommunikationsrunde, also eine Aufteilung in zehn Abschnitte oder Slots. Dabei ist die Dauer eines Slots die Länge der 16-Byte-Nachricht plus zugehörigem Inter Frame Gap IG. Durch die Möglichkeit, dass der Inter Frame Gap auch 0 sein kann, ist in diesem Beispiel Abschnitt und Datenabschnitt gleichgesetzt und mit S1 bezeichnet. Damit setzt sich der Kommunikationszyklus zusammen aus 10 x 16 Byte plus dem Inter Frame Gap plus, hier dargestellt von T29 bis 30, eine Zeitspanne, in der keine Nachricht gesendet werden darf, die sogenannte Network Idle Time NIT. Diese ist optional, aber als mögliche Ausprägung des Busprotokolls hiermit dargestellt. In diesem Kommunikationszyklus wird beispielsweise von einer Konfiguration ausgegangen, die nur ein statisches Segment enthält. Aus Übersichtlichkeitsgründen ist ein mögliches dynamisches Segment zwischen dem statischen Segment und der Network Idle Time, also bei T29 nicht dargestellt.

Teilnehmer 103 ist beispielsweise ein einfacher Winkelsensor im Kraftfahrzeug, der lediglich eine 2 Byte breite Nachricht zu senden hat. Deshalb wird ein diesem zugeordneter Nachrichtenspeicher auch nur auf diese Datenbreite maßgeschneidert, spezifiziert und realisiert werden, insbesondere aus Kostengründen. Dennoch muss sich auch dieser Winkelsensor am vorgestellten Bussystem gemäß der Spezifikation, also dem Busprotokoll, verhalten und in seinem zugewiesenen Abschnitt, also seinem Sendeslot, eine 16-Byte-Nachricht senden. Dies sei hier beispielsweise der Abschnitt S 1 plus zugehörigem Inter Frame Gap IG1. Das bedeutet, dass kurz vor dem Senden im Sendepuffer oder Sendespeicher (Transmit-Buffer) die eigentlich eingestellte Nachricht von eben beispielsweise 2 Byte, also hier von T1 bis T3, also Byte S11, S12 und S13 abgelegt würde, wobei dieser Dateninhalt, also der Sensorwert, dann um weitere 14 Byte aufgefüllt bzw. erweitert werden muss. Dabei werden gemäß dem bisherigen Vorgehen die Bytes üblicherweise links oder rechts im Rahmen, also bei den most significant bits, MSB, oder den least significant bits, LSB, abgelegt, was das weitere Auffüllen nach bisherigem Vorgehen erleichtert. Diese verwendeten Füllbytes, also beispielsweise hier im Beispiel von S14 bis S116 werden als Paddingbytes oder auch als Paddingmuster oder Füllmuster bezeichnet. Also eine ausgewählte Zeichensegment, die das Paddingmuster oder Füllmuster eindeutig kennzeichnet, z. B. 0xFF in hexadezimaler Darstellung. Im vorliegenden Fall würde der Sensorwert 0x8005, entspricht beispielsweise der Winkelinformation minus 0,5 Grad in hexadezimaler Codierung mit negativem Vorzeichen mit most significant bit, MSB (gesetzt für negative Zahl) auf 0x80/05/FF/FF/FF/FF/FF/FF/FF/FF/FF/FF/FF/FF/FF/FF ergänzt, insbesondere im Sendespeicher oder Sendepuffer 109 ergänzt.

Nach bisherigem Vorgehen, wenn, wie oben beschrieben, der eigentliche Dateninhalt in den Sendepuffer oder Transmit-Puffer 109 kopiert und danach mit dem Paddingmuster ergänzt wird, kann es im Fehlerfall zum fälschlichen Auffüllen kommen.
A) Dabei wird beispielsweise der Nachrichteninhalt teilweise überschrieben. In diesem Beispiel entsteht also beispielsweise 0x80/0F/FF/FF/FF/FF/FF/FF/FF/FF/FF/FF/FF/FF/FF/FF ein falscher Nachrichteninhalt. D. h. der dabei entstehende falsche Nachrichteninhalt wird dann fehlerhaft als Sensorinformation übertragen, und der beim Senden berechnete CRC, also der cyclic redundancy check, kann diesen Fehler nicht entdecken. Ein Plausibilitätstest in der Applikation könnte diesen Fehler eventuell entdecken, was aber mit großen Unsicherheiten behaftet ist.
B) Des Weiteren kann der Nachrichteninhalt auch vollständig überschrieben werden, was dann zu 0xFF/F/FF/FF/FF/FF/FF/FF/FF/FF/FF/FF/FF/FF/FF/FF führt, wodurch wiederum ein falscher Nachrichteninhalt entstehen würde. Der beim Senden berechnete cyclic redundandy check, kann diesen Fehler nicht entdecken, und auch ein Plausibilitätstest in der Applikation kann diesen Fehler nicht aufdecken.
C) Des Weiteren ist es möglich, dass die Nachrichtenlänge über die zulässige Länge hinaus ergänzt wird. Dabei entstehen Dateninhalte oder Nachrichteninhalte undefinierten Inhalts. Wie beispielsweise 0x80/05/77/FF/FF/FF/FF/FF/FF/FF/FF/FF/FF/FF/FF/FF/FF, d. h. auch hier entsteht ein falscher Nachrichteninhalt. Die cyclic-redundancy-check-Berechnung findet lediglich über die 16 Bytes statt und kann den Fehler nicht entdecken. Der Plausibilitätstest kann diesen Fehler zwar entdecken, aber nur, wenn in der Applikation über die eigentliche Nachricht, also die zwei Byte, hinaus geprüft wird.

Zur Lösung schlägt vorliegende Erfindung vor, vor jedem Sendevorgang den Abschnitt, also hier insbesondere den Sendepuffer oder Transmit-Buffer, mit dem Füllmuster oder Paddingmuster aufzufüllen, und zwar komplett. Dabei muss natürlich die vordefinierte Nachrichten- oder Datenbreite, also hier beispielsweise 16 Byte eingehalten werden. Das bedeutet, dass der Sendeslot oder Abschnitt S 1 des Sensors 103 nun mit einem Füllmuster oder Paddingmuster, also die Bytes S11 bis S116 aufgefüllt wird. Erst jetzt wird der Nachrichteninhalt, also hier der Sensorwert von 2 Byte, an der richtigen Stelle in den Abschnitt, also insbesondere im Sendepuffer kopiert und überschreibt dabei an diesen Stellen das Padding- oder Füllmuster. Damit sind zum Einen die oben genannten Fehlerfälle A bis C ausgeschlossen. Zum Anderen kann eine beliebige Position für den Dateninhalt, also den eigentlich zu sendenden Sensorwert, vorgegeben werden, da eben zunächst das Füllmuster eingeschrieben wird und ein kompliziert nachträgliches Auffüllen mit Bytes im Rahmen des Padding nicht mehr erforderlich ist.

Damit kann durch die genannte einfache Vorgehensweise der Erfindung eine hohe Fehlersicherheit durch eine einfache Maßnahme, insbesondere per Design, ausgeschaltet werden, wobei die Effizienz des Protokollablaufs nicht gefährdet wird.

## Patentansprüche

1. Verfahren zum Auffüllen von Abschnitten zur Übertragung von Daten auf einem Bussystem, wobei die Abschnitte eine vorgegebene Gesamtzahl an Binärer Information, inbesondere Bytes, aufweisen und die Daten in den Abschnitten übertragen werden, wobei bei einer Übertragung von Daten, die weniger Binäre Information, insbesondere Bytes, umfassen als die vorgegebene Gesamtzahl des Abschnittes die fehlende Binäre Information, insbesondere Bytes, der Daten zur Gesamtzahl des Abschnittes durch ein Füllmuster entsprechender Zahl Binärer Information, insbesondere Bytes, aufgefüllt werden **dadurch gekennzeichnet, dass** zuerst ein Füllmuster dessen Zahl Binärer Information, insbesondere Bytes, der Gesamtzahl des Abschnittes entspricht in den Abschnitt eingeschrieben wird und anschließend die Binäre Information, insbesondere Bytes, der Daten in den selben Abschnitt eingeschrieben werden, wobei die jeweiligen Binäre Information, insbesondere Bytes, des Füllmusters durch die Binäre Information, insbesondere Bytes, der Daten überschrieben werden.

2. Verfahren nach Anspruch 1, **dadurch gekennzeichnet, dass** die Binäre Information, insbesondere Bytes, des Füllmusters und die Binäre Information, insbesondere Bytes, der Daten in einem Pufferspeicher in den Abschnitt eingeschrieben werden und dieser Abschnitt aus dem Pufferspeicher auf das Bussystem übertragen wird.

3. Verfahren nach Anspruch 1, **dadurch gekennzeichnet, dass** es sich bei dem Bussystem um ein zeitgesteuertes Bussystem handelt und die Abschnitte Zeitabschnitten auf dem Bussystem entsprechen, wobei die Daten in den entsprechenden Zeitabschnitten übertragen werden.

4. Vorrichtung zum Auffüllen von Abschnitten zur Übertragung von Daten auf einem Bussystem, wobei die Abschnitte eine vorgegebene Gesamtzahl an Binärer Information, insbesondere Bytes, aufweisen und erste Mittel enthalten sind, die die Daten in den Abschnitten übertragen, wobei zweite Mittel enthalten sind, die bei einer Übertragung von Daten, die weniger Binäre Information, insbesondere Bytes, umfassen als die vorgegebene Gesamtzahl des Abschnittes die fehlende Binäre Information, insbesondere Bytes, der Daten zur Gesamtzahl des Abschnittes durch ein Füllmuster entsprechender Zahl Binärer Information, insbesondere Bytes, auffüllen **dadurch gekennzeichnet, dass** die zweiten Mittel zuerst ein Füllmuster dessen Zahl Binärer Information, insbesondere Bytes, der Gesamtzahl des Abschnittes entspricht in den Abschnitt einschreiben und anschließend die Binäre Information, insbesondere Bytes, der Daten in den selben Abschnitt einschreiben, wobei die jeweilige Binäre Information, insbesondere Bytes, des Füllmusters durch die Binäre Information, insbesondere Bytes, der Daten überschrieben werden.

5. Bussystem mit einer Vorrichtung zum Auffüllen von Abschnitten zur Übertragung von Daten auf dem Bussystem, wobei die Abschnitte eine vorgegebene Gesamtzahl an Binärer Information, insbesondere Bytes, aufweisen und erste Mittel enthalten sind, die die Daten in den Abschnitten übertragen, wobei zweite Mittel enthalten sind, die bei einer Übertragung von Daten, die weniger Binäre Information, insbesondere Bytes, umfassen als die vorgegebene Gesamtzahl des Abschnittes die fehlende Binäre Information, insbesondere Bytes, der Daten zur Gesamtzahl des Abschnittes durch ein Füllmuster entsprechender Zahl Binärer Information, insbesondere Bytes, auffüllen **dadurch gekennzeichnet, dass** die zweiten Mittel zuerst ein Füllmuster dessen Zahl Binärer Information, insbesondere Bytes, der Gesamtzahl des Abschnittes entspricht in den Abschnitt einschreiben und anschließend die Binäre Information, insbesondere Bytes, der Daten in den selben Abschnitt einschreiben, wobei die jeweilige Binäre Information, insbesondere Bytes, des Füllmusters durch die Binäre Information, insbesondere Bytes, der Daten überschrieben werden.

## Claims

1. Method for filling sections for transmission of data on a bus system, with the sections having a predetermined total number of binary information items, in particular bytes, and the data being transmitted in the sections, in which case, when data is being transmitted which has less binary information, in particular bytes, than the predetermined total number for that section, the missing binary information, in particular bytes, of the data is filled in to form the total number for that section by means of a filling pattern comprising an appropriate number of binary information items, in particular bytes, **characterized in that**, first of all, a filling pattern whose number of binary information items, in particular bytes, corresponds to the total number for that section is written to that section, and the binary information, in particular bytes, of the data is then written to the same section, with the respective binary information, in particular bytes, in the filling pattern being overwritten by the binary information, in particular bytes, of the data.

2. Method according to Claim 1, **characterized in that** the binary information, in particular bytes, in the filling pattern, and the binary information, in particular bytes, in the data, is written to the section in a buffer store, and this section is transmitted from the buffer store to the bus system.

3. Method according to Claim 1, **characterized in that** the bus system is a time-controlled bus system, and the sections correspond to time intervals on the bus system, with the data being transmitted in the appropriate time intervals.

4. Apparatus for filling sections for transmission of data on a bus system, with the sections having a predetermined total number of binary information items, in particular bytes, and containing first means which transmit the data in the sections, with second means being included which, when data is being transmitted which has less binary information, in particular bytes, than the predetermined total number for that section, fills in the missing binary information, in particular bytes, of the data to form the total number for that section by means of a filling pattern comprising an appropriate number of binary information items, in particular bytes, **characterized in that** the second means first of all writes a filling pattern, whose number of binary information items, in particular bytes, corresponds to the total number for that section, to that section and then writes the binary information, in particular bytes, of the data to the same section, with the respective binary information, in particular bytes, in the filling pattern being overwritten by the binary information, in particular bytes, of the data.

5. Bus system having an apparatus for filling sections for transmission of data on a bus system, with the sections having a predetermined total number of binary information items, in particular bytes, and containing first means which transmit the data in the sections, with second means being included which, when data is being transmitted which comprises less binary information, in particular bytes, than the predetermined total number for that section fills in the missing binary information, in particular bytes, of the data to form the total number for that section by means of a filling pattern comprising an appropriate number of binary information items, in particular bytes, **characterized in that** the second means first of all writes a filling pattern, whose number of binary information items, in particular bytes, corresponds to the total number for that section, to that section and then writes the binary information, in particular bytes, of the data to the same section, with the respective binary information, in particular bytes, in the filling pattern being overwritten by the binary information, in particular bytes, of the data.

## Revendications

1. Procédé de remplissage de segments pour transmettre des données sur un système bus, les segments présentant un nombre total prédéterminé d'informations binaires, en particulier d'octets, et les données étant transmises dans les segments, selon lequel, lors d'une transmission de données comprenant moins d'informations binaires, en particulier d'octets, que le nombre total prédéterminé du segment, les informations binaires, en particulier les octets, des données manquantes par rapport au nombre total du segment sont remplies d'un modèle de remplissage ayant un nombre correspondant d'informations binaires, en particulier d'octets,
**caractérisé en ce qu'**
un modèle de remplissage, dont le nombre d'informations binaires, en particulier d'octets, correspond au nombre total du segment, est d'abord enregistré dans le segment, puis les informations binaires, en particulier les octets, des données sont enregistrées dans le même segment, les informations binaires respectives, en particulier les octets, du modèle de remplissage étant écrasées par les informations binaires, en particulier les octets, des données.

2. Procédé selon la revendication 1,
**caractérisé en ce que**
les informations binaires, en particulier les octets, du modèle de remplissage et les informations binaires, en particulier les octets, des données sont enregistrées dans une mémoire tampon dans le segment et ce segment est transmis de la mémoire tampon au système bus.

3. Procédé selon la revendication 1,
**caractérisé en ce que**
le système bus est un système bus à commande temporelle et les segments correspondent à des segments de temps sur le système bus, les données étant transmises dans les segments de temps correspondants.

4. Dispositif de remplissage de segments pour transmettre des données sur un système bus, les segments présentant un nombre total prédéterminé d'informations binaires, en particulier d'octets, et contenant des premiers moyens transmettant les données dans les segments, des seconds moyens étant prévus pour, lors d'une transmission de données comprenant moins d'informations binaires, en particulier d'octets, que le nombre total prédéterminé du segment, remplir d'un modèle de remplissage ayant un nombre correspondant d'informations binaires, en particulier d'octets, les informations binaires, en particulier les octets, des données manquantes par rapport au nombre total du segment,
**caractérisé en ce que**
les seconds moyens enregistrent d'abord dans le segment un modèle de remplissage dont le nombre d'informations binaires, en particulier d'octets, correspond au nombre total du segment, puis enregistrent les informations binaires, en particulier les octets, des données dans le même segment, les informations binaires respectives, en particulier les octets, du modèle de remplissage étant écrasées par les informations binaires, en particulier les octets, des données.

5. Système bus comprenant un dispositif de remplissage de segments pour transmettre des données sur le système bus, les segments présentant un nombre total prédéterminé d'informations binaires, en particulier d'octets, et contenant des premiers moyens transmettant les données dans les segments, avec des seconds moyens qui lors d'une transmission de données comprenant moins d'informations binaires, en particulier d'octets, que le nombre total prédéterminé du segment, remplissent d'un modèle de remplissage ayant un nombre correspondant d'informations binaires, en particulier d'octets, les informations binaires, en particulier les octets, des données manquantes par rapport au nombre total du segment,
**caractérisé en ce qu'**
les seconds moyens enregistrent d'abord dans le segment un modèle de remplissage dont le nombre d'informations binaires, en particulier d'octets, correspond au nombre total du segment, puis enregistrent les informations binaires, en particulier les octets, des données dans le même segment, les informations binaires respectives, en particulier les octets, du modèle de remplissage étant écrasées par les informations binaires, en particulier les octets, des données
